# EUROPÄISCHE PATENTSCHRIFT

(11) **EP 0 516 127 B1**
(45) Veröffentlichungstag und Bekanntmachung des Hinweises auf die Patenterteilung: **15.11.1995**
(21) Anmeldenummer: 92109060.1
(22) Anmeldetag: 29.05.1992
(51) Int. Cl.: B29B 11/10, B29B 13/04, B29C 35/02, B29C 47/88

(54) **Vorrichtung zum Auffangen von schmelzflüssigen Kunststoffsträngen mit einer Einrichtung zur Anzeige des ungestörten Laufs der Kunststoffstränge**
Receiving apparatus for catching molten plastic strands with a sensor for displaying the undisturbed flow of the molten plastic strands
Dispositif pour la collecte de cordons plastiques en fusion comportant un dispositif signalant le cheminement normal de ces cordons

(30) Priorität: 31.05.1991 DE 4117941
(43) Veröffentlichungstag der Anmeldung: 02.12.1992
(73) Patentinhaber: RIETER AUTOMATIK GmbH, D-63762 Grossostheim (DE)
(72) Erfinder: Keilert, Jürgen, Dipl.-Ing., W-8751 Kleinwallstadt (DE); Glöckner, Frank, W-8750 Aschaffenburg (DE); Zinke, Klaus-Rüdiger, W-8751 Sulzbach (DE)
(74) Vertreter: Bardehle, Heinz, Dipl.-Ing.

(56) Entgegenhaltungen:
- EP-A- 0 303 166
- DE-A- 3 205 052
- DE-A- 3 615 333
- US-A- 4 180 539

## Beschreibung

Die Erfindung bezieht sich auf eine Vorrichtung zum Auffangen und Weiterleiten von aus Düsen austretenden schmelzflüssigen Kunststoffsträngen auf einer von Kühlwasser überströmten Ablaufplatte, wie sie aus der DE-A-32 05 052 bekannt ist und wobei eine Einrichtung zur Anzeige des ungestörten Laufs der Kunststoffstränge über die Ablaufplatte bzw. deren Anhäufung auf der Ablaufplatte vorgesehen ist.

Bei derartigen Vorrichtungen kann es zu einer Störung des Laufs der Kunststoffstränge z. B. dadurch kommen, daß ein Strang eine Inhomogenität des Kunststoffs enthalt, die dazu führt, daß der Strang nach Austritt aus der Düse seitlich ausweicht und sich dabei mit einem oder mehreren benachbarten Strängen verliebt. Es ist dann nicht auszuschließen, daß aufgrund einer solchen Verklebung sich eine plötzliche Zusammenballung von Kunststoffsträngen ergibt, die sich dann als wirrer Haufen auf der Ablaufplatte absetzen und damit den weiteren Lauf der Kunststoffstränge unterbrechen. Obwohl derartige Fälle äußerst selten auftreten, hat sich dennoch die Notwendigkeit ergeben, einen solchen Störungsfall sofort zu signalisieren, um z. B. die betreffende Vorrichtung schnell abzuschalten. Hierzu hat man unmittelbar oberhalb der Ablaufplatte angeordnete Lichtschranken verwendet, die durch derartige Anhäufungen von Kunststoffsträngen unterbrochen werden und damit das gewünschte Signal auslösen. Da nun bei einem Betrieb derartiger Vorrichtungen häufig Dämpfe entstehen, wurde derartigen Lichtschranken hierdurch eine Unterbrechung vorgetäuscht, so daß im Falle des Auftretens solcher Dämpfe Fehlalarme ausgelöst worden sind. Um dieses Problem zu beseitigen, hat man mechanisch wirkende Anzeigeorgane verwendet, mit denen die genannten Anhäufungen festgestellt werden Diese mechanischen Einrichtungen bestehen aus einer oberhalb der Ablaufplatte angeordneten schwenkbaren Klappe, die so angeordnet ist, daß im normalen Betrieb die Stränge ungehindert unter der Klappe ablauten können. Bildet sich jedoch eine Anhäufung auf der Ablautplatte aus, so verschiebt die Anhäufung während ihres Entstehens die Klappe aus ihrer Normallage, was dann dazu ausgenützt wird, das gewünschte Signal zu erzeugen. Hierbei hat sich jedoch gezeigt, daß der Berührungskontakt zwischen der Klappe und den die Anhäufung bildenden noch schmelzflüssigen Kunststoffsträngen zu Verklebungen mit der Klappe führte, wodurch diese nach erfolgter Auslenkung gereinigt werden mußte, was wegen der Empfindlichkeit der Klappe schwierig zu bewerkstelligen war, da hierbei vermieden werden mußte, die empfindliche Lagerung der Klappe zu beschädigen.

Der Erfindung liegt die Aufgabe zugrunde, die eingangs genannte Vorrichtung so zu gestalten, daß sie mit hoher Betriebssicherheit arbeitet und durch die erwähnten Anhäufungen von Kunststoffsträngen nicht beschädigt werden kann. Erfindungsgemäß geschieht dies dadurch, daß an einer kühlwasserfreien Zone der Unterseite der Ablaufplatte im Bereich des Auftreffens der Kunststoffstränge mindestens ein temperaturabhängiger elektrischer Widerstand (Meßwiderstand) angebracht ist, der über einen Schwellwertschalter bei Überschreiten einer vorgegebenen Temperatur ein Signal auslöst.

Die Erfindung macht sich die Erkenntnis zunutze, daß eine Anhäufung schmelzflüssiger Kunststoffstränge auf der Ablaufplatte an der betreffenden Stelle den Kühlwasserstrom erheblich behindert oder sogar unterbricht, so daß die den schmelzflüssigen Kunststoffsträngen innewohnende Wärme durch das Kühlwasser nicht mehr abgeführt werden kann. An der betreffenden Stelle erwärmt sich daher die Ablaufplatte relativ schnell (innerhalb weniger Sekunden), was sich auf den im Bereich des Auftreffens der Kunststoffstränge angebrachten temperaturabhängigen Meßwiderstand überträgt. Dieser Meßwiderstand ist an der Unterseite der Ablaufplatte, also auf der einer möglichen Anhäufung abgewandten Seite der Kunststoffplatte der Ablaufplatte, angeordnet und kann daher durch die Kunststoffstränge nicht beschädigt werden. Insbesondere kann er beim Abtragen einer möglicherweise an der Ablaufplatte angeklebten Anhäufung nicht beschädigt werden. Da er außerdem an einer Stelle angebracht ist, die von Kühlwasser freigehalten wird, wirkt sich dieses nicht auf die Temperatur des Meßwiderstandes aus, d. h., der Meßwiderstand folgt mit seiner Temperatur unmittelbar der plötzlichen Erwärmung der Ablaufplatte. Diese aufgrund der erwähnten Anhäufung entstehende Erwärmung des Meßwiderstandes wird dann dazu ausgenutzt, ein Signal auszulösen, das z. B. akustisch oder optisch angezeigt werden kann und darüber hinaus ggf. dazu verwendet wird, die betreffende Vorrichtung sofort abzuschalten.

Bei dieser Verarbeitung von Kunststoffsträngen ergeben sich je nach der betreffenden Zusammensetzung des Kunststoffs unterschiedliche Temperaturen z. B. auch des Kühlwassers, so daß der Schwellwertschalter, der den plötzlichen Temperaturanstieg im Meßwiderstand anzeigt, jeweils hierauf einzustellen ist. Um diese jeweils erforderliche Anpassung der Einrichtung an den zu verarbeitenden Kunststoff unnötig zu machen, kann man die Vorrichtung zweckmäßig so gestalten, daß an der Ablaufplatte außer mindestens einem Meßwiderstand ein temperaturabhängiger Widerstand als Kompensationswiderstand in einem Bereich außerhalb des Auftreffens der Kunststoffstränge angebracht ist, wobei Meßwiderstand und Kompensationswiderstand in einer Brückenschaltung enthalten sind, in deren Brückenzweig der Schwellwertschalter zur Anzeige einer bestimmten Temperaturdifferenz zwischen Meßwiderstand und Kompensationswiderstand liegt.

Aufgrund der Anordnung des Meßwiderstandes und des Kompensationswiderstandes innerhalb einer elektrischen Brückenschaltung ergibt sich eine automatische Anpassung an den jeweiligen Betriebsfall, da in der Brückenschaltung die Temperaturdifferenz zwischen Meßwiderstand und Kompensationswiderstand angezeigt wird. Der Kompensationswiderstand liefert nämlich eine Art Referenzwert für die Durchführung der Temperaturmessung, da er in einem Bereich außerhalb des Auftreffens der Kunststoffstränge angebracht ist und daher die Temperatur der Ablaufplatte im normalen Betrieb annimmt, die weitgehend der Kühlwassertemperatur entspricht. Die Kühlwassertemperatur orientiert sich an dem jeweils zu bearbeitenden Kunststoffmaterial.

Die Vorrichtung läßt sich weiterhin dadurch betriebssicherer gestalten, daß vor den Schwellwertschalter ein elektrisches Filter insbesonders ein RC-Glied geschaltet ist, das das Ansprechen des Schwellwertschalters auf von dem Filter übertragene schnelle Spannungsänderungen beschränkt. Wenn z. B. durch längerwährenden Betrieb wegen besonders vorgesehener Kühlung des Kühlwassers sich ein beträchtlicher Temperaturunterschied zwischen Meßwiderstand und Kompensationswiderstand bzw. eine ins Gewicht fallende Temperaturerhöhung nur am Meßwiderstand ergibt, so wird eine solche Änderung durch das Filter unterdrückt und tritt dann am Schwellwertschalter überhaupt nicht mehr in Erscheinung. Ergibt sich jedoch aufgrund des Entstehens einer Anhäufung von schmelzflüssigen Kunststoffsträngen auf der Ablaufplatte eine plötzliche Temperaturerhöhung an der betreffenden Stelle, so wird diese relativ schnell erfolgende Temperaturerhöhung bzw. Temperaturdifferenz von dem Filter übertragen und kann daher den Schwellwertschalter zur Auslösung bringen.

Da die oben beschriebenen Vorrichtungen meist eine Vielzahl von nebeneinander ablaufenden Kunststoffsträngen verarbeiten, werden zweckmäßig über die Breite der Ablaufplatte jeweils eine Mehrzahl von Meßwiderständen und ggf. Kompensationswiderständen in Reihenschaltung angeordnet. Hierdurch wird erreicht, daß über die gesamte Breite der Ablaufplatte ständig gemessen wird, ob an irgendeiner Stelle der Ablaufplatte plötzlich eine Anhäufung von Kunststoffsträngen entsteht.

Ansführungsbeispiele der Erfindung sind in den Figuren dargestellt. Es zeigen
Figur 1 die unterhalb eines Düsenpakets angeordnete Ablaufplatte mit Wasserzulauf im Querschnitt von der Seite gesehen mit einem Meßwiderstand und einem Kompensationswiderstand
Figur 2 eine Draufsicht auf die Ablaufplatte mit eingezeichneter Reihenschaltung von jeweils mehreren Meßwiderständen und mehreren Kompensationswiderständen
Figur 3 eine Schaltungsanordnung mit einem Meßwiderstand
Figur 4 eine Brückenschaltung mit einem Meßwiderstand und einem Kompensationswiderstand.

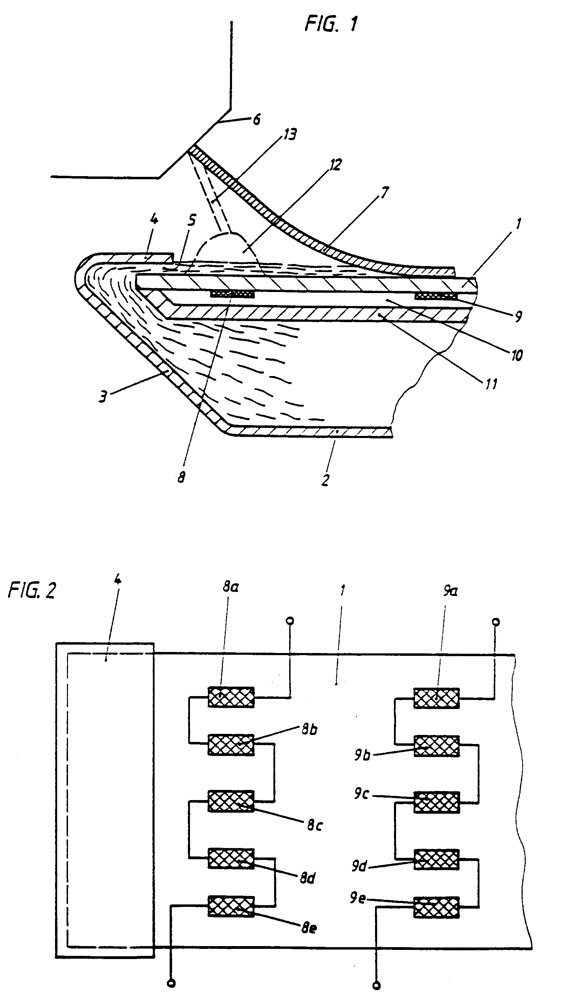

Die Darstellung in Figur 1 geht aus von einer Vorrichtung zum Auffangen und Weiterleiten von aus Düsen austretenden schmelzflüssigen Kunststoffsträngen, wie sie in der DE-A-32 05 052 beschrieben und abgebildet ist. Diese Vorrichtung enthält die Ablaufplatte 1, die einen mit Kühlwasser versorgten Wasserkasten 2 an dessen Oberseite abschließt. Der Wasserkasten 2 geht an seiner linken Seite in ein schräg aufwärts gerichtetes Leitblech 3 über, das oberhalb der Ablaufplatte 1 in das Abdeckblech 4 übergeht, das gegenüber der Ablaufplatte 1 den Schlitz 5 freiläßt. Durch diesen Schlitz 5 strömt das in den Wasserkasten 2 eingeleitete Kühlwasser aus und überströmt die Ablaufplatte 1, wobei es aus dem Düsenpaket 6 austretende Kunststoffstränge 7 mitnimmt. Aus Gründen der Einfachheit ist hier nur ein einziger Kunststoffstrang damestellt. Im Normalfall handelt es sich um eine Vielzahl von nebeneinander angeordneten Kunststoffsträngen, z. B. 60. Dementsprechend enthält das Düsenpaket 6 eine entsprechende Anzahl von einzelnen Düsen.

Unterhalb der Ablaufplatte 1 ist an dieser der Meßwiderstand 8 und der Kompensationswiderstand 9 angeklebt, so daß diese Widerstände stets die Temperatur des betreffenden Bereichs der Ablaufplatte 1 annehmen. Je nach Art des verwendeten Widerstandes kann man diese auch auf andere Weise an der Ablaufplatte 1 befestigen, wobei darauf zu achten ist, daß ein direkter Wärmeübergang von der Ablaufplatte 1 zu dem betreffenden Widerstand 8 bzw. 9 existiert. Damit die Widerstände 8 und 9 nicht durch das im Wasserkasten 2 strömende Kühlwasser beeinflußt werden ist unterhalb der Ablaufplatte 1 eine kühlwasserfreie Zone 10 gebildet, und zwar durch den randseitig an der Ablaufplatte 1 angeschweißten Deckel 11, der die Zone 10 gegenüber dem Wasserkasten 2 abdichtet. Von den Widerständen 8 und 9 wird auf diese Weise das Kühlwasser im Wasserkasten 2 ferngehalten.

Die in der Figur 1 eingezeichneten Widerstände 8 und 9 können auch in die Ablaufplatte 1 eingelassen werden, wozu diese mit entsprechenden Nuten zu versehen ist. Dies hat den Vorteil, daß in diesem Falle ein besonders inniger Warmekontakt zwischen der Ablaufplatte 1 und den betreffenden Widerständen 8 und 9 herbeigeführt wird.

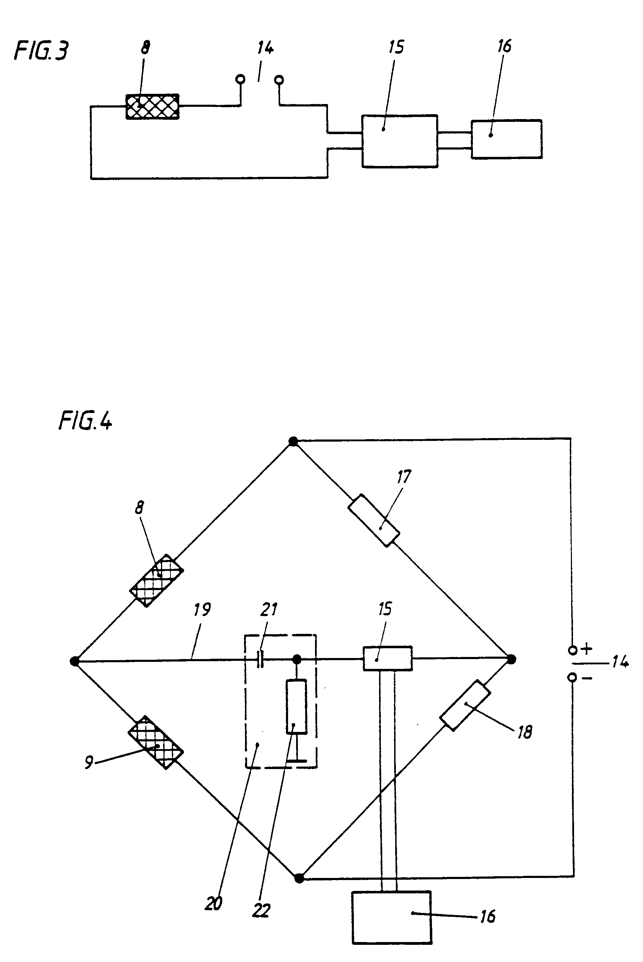

Im Bereich des Meßwiderstandes 8 ist auf der Ablaufplatte 1 eine Anhäufung 12 eines Kunststoffstranges dargestellt, wobei der betreffende Kunststoffstrang durch die strichpunktierte Linie 13 angedeutet ist. Diese Anhäufung führt unmittelbar bei ihrem Entstehen zu einer schnellen Temperaturerhöhung in dem betreffenden Bereich der Ablaufplatte 1, die sich dem Meßwiderstand 8 mitteilt und über eine im Zusammenhang mit den Figuren 3 und 4 dargestellte elektrische Schaltung zur Signalisierung des Vorhandenseins einer solchen Anhäufung 12 führt.

Da es sich, wie oben dargelegt, bei derartigen Vorrichtungen meist darum handelt, eine Vielzahl von Strängen 7 aufzufangen, werden die betreffenden Widerstände zweckmäßig über die gesamte Breite der Ablaufplatte 1 angeordnet. Dies ist in Figur 2 dargestellt, die lediglich die Ablaufplatte 1 und das Abdeckblech 4 zeigt. Aus Gründen der Übersichtlichkeit der Darstellung ist in Figur 2 das Düsenpaket 6 weggelassen. In Figur 2 sind weiterhin in der Darstellungsweise elektrischer Schaltungen mehrere Meßwiderstände 8a bis 8e und Kompensationswiderstände 9a bis 9e eingezeichnet. Die Meßwiderstände 8a bis 8e und die Kompensationswiderstände 9a bis 9e sind jeweils in Reihe geschaltet. Tritt bei einem oder mehreren der Meßwiderstände 8a bis 8e eine plötzliche Temperaturerhöhung ein, so kann diese mittels der in den Figuren 3 und 4 dargestellten Schaltungen sofort angezeigt werden. Durch die Verteilung mehrerer Meßwiderstände 8a bis 8e und Kompensationswiderstände 9a bis 9e wird die gesamte Breite der Ablaufplatte 1 hinsichtlich des Entstehens von Anhäufungen überwacht.

In der Figur 3 ist eine Schaltungsanordnung dargestellt, die lediglich mit einem oder mehreren Meßwiderständen 8 ausgestattet ist, je nachdem, wieviele Meßwiderstände 8 über die Breite der betreffenden Ablaufplatte 1 verteilt werden. Der Meßwiderstand wird von einer Spannungsquelle 14 mit Strom versorgt, der außer über den Meßwiderstand 8 noch über den Schwellwertschalter 15 fließt und bei Überschreiten einer bestimmten Spannung am Schwellwertschalter 15 diesen auslöst. Der Schwellwertschalter aktiviert damit den an ihn angeschlossenen Signalgeber 16, der z. B. das Abschalten der Vorrichtung bewirkt. Im Falle der Verwendung der in Figur 3 dargestellten Schaltung ist natürlich in der Konstruktion gemäß Figur 1 nur der Meßwiderstand 8 vorzusehen.

Bei der in der Figur 4 dargestellten Schaltung handelt es sich um eine Brückenschaltung mit dem Meßwiderstand 8 und dem Kompensationswiderstand 9 sowie den beiden festen Brückenwiderständen 17 und 18. In den Brückenzweig 19 der Brückerschaltung ist der Schwellwertschalter 15 gelegt, der wie bei der Schaltung gemäß Figur 3 den Signalgeber 16 aktiviert. Tritt bei der Schaltung gemäß Figur 4 eine bestimmte Temperaturdifferenz zwischen dem Meßwiderstand 8 und dem Kompensationswiderstand 9 ein, so führt diese Temperaturdifferenz gemäß der Wirkung der Brückerschaltung zu einem Strom in dem Brückenzweig 19 mit der Folge des Ansprechens des Schwellwertschalters 15.

Im Brückenzweig 19 ist die von einer gestrichelten Linie eingeschlossene Filterschaltung 20 dargestellt, die hier durch das RC-Glied mit dem Kondensator 21 und dem Widerstand 22 gebildet wird. Die Zeitkonstante dieses Filters 20 ist so gewählt, daß relativ schnelle Temperaturänderungen am Meßwiderstand 8 zu einem auswertbaren Impuls am Widerstand 22 führen, der dann den Schwellwertschalter 15 aktiviert Es handelt sich hierbei um Spannungsänderungen, die sich im Bereich einiger weniger Sekunden abspielen, die dann von der Filterschaltung 20 entsprechend übertragen werden. Handelt es sich dagegen um aufgrund zeitlich gedehnter Einflüsse sich ergebende Temperaturänderungen an den Widerständen 8 bzw. 9, so werden diese Temperaturänderungen, die dann auch nicht auf das plötzliche Entstehen einer Anhäufung zurückzuführen sind, von dem Filter 20 nicht übertragen und können somit nicht zur Auslösung eines Fehlalarmes führen.

## Patentansprüche

1. Vorrichtung zum Auffangen und Weiterleiten von aus Düsen (6) austretenden schmelzflüssigen Kunststoffsträngen (7) auf einer von Kühlwasser überströmten Ablaufplatte (1) mit einer Einrichtung zur Anzeige des ungestörten Laufs der Kunststoffstränge (7) über die Ablaufplatte (1) bzw. deren Anhäufung auf der Ablaufplatte (1), **dadurch gekennzeichnet**, daß an einer kühlwasserfreien Zone (10) der Unterseite der Ablaufplatte (1) im Bereich des Auftreffens der Kunststoffstränge (7) mindestens ein temperaturabhängiger elektrischer Meßwiderstand (8) angebracht ist, der über einen Schwellwertschalter (15) bei Überschreiten einer vorgegebenen Temperatur ein Signal auslöst.

2. Vorrichtung nach Anspruch 1, **dadurch gekennzeichnet**, daß an der Ablaufplatte (1) außer mindestens einem Meßwiderstand (8) mindestens ein temperaturabhängiger Widerstand als Kompensationswiderstand (9) in einem Bereich außerhalb des Auftreffens der Kunststoffstränge (7) angebracht ist, wobei Meßwiderstand (8) und Kompensationswiderstand (9) in einer Brückenschaltung (8, 9, 17, 18, 19) enthalten sind, in deren Brückenzweig (19) der Schwellwertschalter (15) zur Anzeige einer bestimmten Temperaturdifferenz zwischen Meßwiderstand (8) und Kompensationswiderstand (9) liegt.

3. Vorrichtung nach Anspruch 1 oder 2, **dadurch gekennzeichnet**, daß vor den Schwellwertschalter (15) ein elektrisches Filter (20), insbesondere ein RC-Glied (21, 22), geschaltet ist, das das Ansprechen des Schwellwertschalters (15) auf von dem Filter (20) übertragene schnelle Spannungsänderungen beschränkt.

4. Vorrichtung nach einem der Ansprüche 1 bis 3, **dadurch gekennzeichnet**, daß über die Breite der Ablaufplatte (1) jeweils eine Mehrzahl von Meßwiderständen (8a-e) und ggf. Kompensationswiderständen (9a-e) in Reihenschaltung angeordnet ist.

## Claims

1. Apparatus for catching molten plastic strands (7) extruded from nozzles (6) and advancing them to a run-off plate (1) traversed by cooling water, with a device for displaying the undisturbed flow of the plastic strands (7) over the run-off plate (1) or their accumulation on the run-off plate (1), characterised in that at least one temperature-dependent electrical measuring resistor (8) is provided in a cooling water-free zone (10) on the underside of the run-off plate (1) in the region of the point of contact with the plastic strands (7), this measuring resistor initiating a signal via a threshold switch (15) when a predetermined temperature is exceeded.

2. Apparatus according to claim 1, characterised in that, in addition to at least one measuring resistor (8), at least one temperature-dependent resistor is provided on the run-off plate (1) as a compensating resistor (9) in a region outside the point of contact with the plastic strands (7), the measuring resistor (8) and the compensating resistor (9) being contained in a bridge circuit (8, 9, 17, 18, 19) in the bridge arm (19) of which the threshold switch (15) for displaying a specific temperature difference between the measuring resistor (8) and the compensating resistor (9) is situated.

3. Apparatus according to claim 1 or claim 2, characterised in that an electric filter (20), in particular an RC element (21, 22), is arranged upstream of the threshold switch (15), this filter limiting the response of the threshold switch (15) to rapid changes in voltage transmitted by the filter (20).

4. Apparatus according to one of claims 1 to 3, characterised in that a plurality of measuring resistors (8a-e) and optionally of compensating resistors (9a-e) are connected in series over the width of the run-off plate (1).

## Revendications

1. Dispositif pour recueillir et transmettre des boudins plastiques (7), liquides à l'état fondu, sortant de filières (6), sur une plaque de décharge (1), sur laquelle s'écoule de l'eau de refroidissement, avec un dispositif pour indiquer le déplacement non perturbé des boudins plastiques (7) sur la plaque de décharge (1) ou leur accumulation sur la plaque de décharge (1), caractérisé en ce qu'au moins une résistance de mesure électrique (8), qui dépend de la température, et qui par l'intermédiaire d'un commutateur de seuil (15) déclenche un signal quand la température dépasse une température prédéfinie, est rapporté à une zone sans eau de refroidissement (10) du côté inférieur de la plaque de décharge (1), dans la zone de l'impact des boudins plastiques (7).

2. Dispositif selon la revendication 1, caractérisé en ce que, outre au moins une résistance de mesure (8), au moins une résistance dépendant de la température, conçue comme une résistance de compensation (9), est rapportée à la plaque de décharge (1), dans une zone située à l'extérieur du point d'impact des boudins plastiques (7), la résistance de mesure (8) et la résistance de compensation (9) étant disposées dans un montage en pont (8, 9, 17, 18, 19), dans la branche (19) duquel se trouve le commutateur de seuil (15), destiné à indiquer une certaine différence de température entre la résistance de mesure (8) et la résistance de compensation (9).

3. Dispositif selon la revendication 1 ou 2, caractérisé en ce qu'en amont du commutateur de seuil (15) est monté un filtre électrique (20), en particulier un élément RC (21, 22), qui limite la réponse du commutateur de seuil (15) aux variations rapides de tension transmises par le filtre (20).

4. Dispositif selon l'une des revendications 1 à 3, caractérisé en ce que, sur toute la largeur de la plaque de décharge (1), un grand nombre de résistances de mesure (8a-e) et éventuellement de résistances de compensation (9a-e) sont montées en série.
